# EUROPÄISCHE PATENTSCHRIFT

(11) **EP 3 596 347 B1**
(45) Veröffentlichungstag und Bekanntmachung des Hinweises auf die Patenterteilung: **21.06.2023**
(21) Anmeldenummer: 18711092.9
(22) Anmeldetag: 13.03.2018
(51) Int. Cl.: F16B 33/00, F16B 41/00

(54) **SICHERUNGSELEMENT FÜR EINE DÜNNSCHAFTSCHRAUBE UND BEFESTIGUNGSSYSTEM**
SECURING ELEMENT FOR A SCREW HAVING A REDUCED SHANK, AND FASTENING SYSTEM
ÉLÉMENT DE BLOCAGE CONÇU POUR UNE VIS À TIGE MINCE ET SYSTÈME DE FIXATION

(30) Priorität: 16.03.2017 DE 102017105687
(43) Veröffentlichungstag der Anmeldung: 22.01.2020
(73) Patentinhaber: Kipp Verpachtungen e.K., 72168 Sulz am Neckar (DE); Freudenberg Process Seals GmbH & Co. KG, 69469 Weinheim (DE)
(72) Erfinder: LAUER, Frank, 69231 Rauenberg (DE); LIEDTKE, Ulrich, 64646 Heppenheim (DE); LEUZE, Jürgen, 72172 Sulz a.N. (DE)
(74) Vertreter: Reiser & Partner Patentanwälte mbB
(86) Internationale Anmeldenummer: PCT/EP2018/056181
(87) Internationale Veröffentlichungsnummer: WO 2018/167026

(56) Entgegenhaltungen:
- EP-A1- 0 618 385
- DE-A1-102011 120 724
- DE-A1-102015 210 516
- JP-A- H09 329 125
- US-A1- 2009 123 252

## Beschreibung

Die Erfindung betrifft ein Befestigungssystem, umfassend ein erstes Maschinenelement mit einer Durchgangsbohrung, ein zweites Maschinenelement mit einer Gewindebohrung, eine Dünnschaftschraube, welche durch die Durchgangsbohrung hindurchragt und in die Gewindebohrung eingeschraubt ist sowie ein Sicherungselement.

Ein derartiges Sicherungselement bzw. Befestigungssystem ist aus der DE 10 2015 210 516 A1 und aus der EP 0618385 A1 bekannt. Derartige Sicherungselemente bzw. Befestigungssysteme werden verwendet, um Schrauben an einem ersten Maschinenelement derart zu sichern, dass die Schraube nach Demontage des ersten Maschinenelementes von dem zweiten Maschinenelement, an welchem das erste Maschinenelement mittels der Schraube verschraubt war, nicht aus der Durchgangsbohrung für die Schraube des ersten Maschinenelementes herausfallen kann. Eine derartige Sicherung von Befestigungsmitteln ist beispielswiese für feststehende trennende Schutzeinrichtungen in der Richtlinie 2006/42/EG vom 17. Mai 2006 vorgeschrieben. Feststehende trennende Schutzeinrichtungen sind beispielsweise Abdeckungen oder Hauben an Maschinen und Anlagen.

Bei dem vorbekannten Befestigungssystem ist sichergestellt, dass die Dünnschaftschraube nicht unbeabsichtigt aus der Durchgangsbohrung entfernt werden kann, wenn das erste Maschinenelement von dem zweiten Maschinenelement getrennt ist.

Bei Einsatz des Befestigungssystems in hygienisch sensiblen Bereichen, beispielsweise in der Lebensmittelverarbeitung, besteht ferner die Anforderung, dass das Befestigungssystem gegen Eindringen von Medien, beispielsweise von Flüssigkeiten geschützt sein soll. Bekannte Sicherungselemente sind jedoch zumeist vollständig aus Metall ausgebildet und daher nur beschränkt geeignet, das Eindringen von Medien in den Spalt zwischen erstem Maschinenelement und zweitem Maschinenelement zu verhindern.

Die US 2009/0123252 A1 zeigt ein Sicherungselement für eine Schraube, umfassend einen Sicherungselementkörper, der mit einer Durchgangsöffnung versehen ist. Der Durchgangsöffnung ist ein Rückhalteelement zugeordnet, wobei das Rückhalteelement ausgestaltet ist, die Schraube gegen unbeabsichtigtes Lösen zu sichern. Dem Sicherungselementkörper ist ein Dichtelement zugeordnet.

Der Erfindung liegt die Aufgabe zugrunde, ein Befestigungssystem bereitzustellen, bei welchem das Befestigungsmittel, insbesondere eine Dünnschaftschraube gegen unbeabsichtigtes Lösen gesichert ist, wobei das Befestigungsmittel demontierbar sein soll und welches das Eindringen von Medien verhindert.

Diese Aufgabe wird mit den Merkmalen von Anspruch 1 gelöst. Auf vorteilhafte Ausgestaltungen nehmen die Unteransprüche Bezug.

Zur Lösung der Aufgabe ist dem Sicherungselementkörper zumindest ein Dichtelement zugeordnet. Dadurch bewirkt das Sicherungselement einerseits eine Fixierung der Dünnschaftschraube, so dass die Dünnschaftschraube gegen unbeabsichtigtes Lösen gesichert ist, andererseits bewirkt das dem Sicherungselement zugeordnete Dichtelement eine Abdichtung des Spaltes zwischen dem ersten Maschinenelement und dem zweiten Maschinenelement. Dadurch ist die Öffnung, in der die Dünnschaftschraube angeordnet ist, gegen das Eindringen von Medien abgedichtet. Insofern ist das erfindungsgemäße Sicherungselement insbesondere für den Einsatz in hygienischen Bereichen, insbesondere in der Lebensmittelverarbeitung geeignet.

Erfindungsgemäß ist das Dichtelement außenumfangsseitig an dem scheibenförmig ausgebildeten Sicherungselementkörper angeordnet. Dadurch, dass der Sicherungselementkörper scheibenförmig ausgebildet ist, wird nur wenig Bauraum für das Sicherungselement benötigt. Dadurch ist der notwendige Spalt zwischen erstem Maschinenelement und zweitem Maschinenelement klein.

Vorzugsweise ist das Dichtelement stoffschlüssig an dem Sicherungselementkörper befestigt. Dabei kann das Dichtelement ringförmig ausgebildet sein. Die Befestigung kann über eine Klebeverbindung erfolgen. Das Dichtelement kann aber auch direkt an den Sicherungselementkörper anvulkanisiert sein, sofern das Dichtelement aus vulkanisiertem Dichtmaterial besteht.

Alternativ oder zusätzlich zu dem Stoffschluss kann das Dichtelement auch formschlüssig an dem Sicherungselementkörper fixiert sein. Dazu kann in den Außenumfang des Sicherungselementkörpers eine umlaufende Nut eingebracht sein, in welche das Dichtelement hineinragt. Bei einer Kombination aus Stoffschluss und Formschluss ist das Dichtelement besonders stabil an den Sicherungselementkörper angebunden.

Das Dichtelement kann zumindest einseitig eine erste Stirnseite des Dichtelementkörpers in axialer Richtung überragen. Gemäß einer vorteilhaften Ausgestaltung überragt das Dichtelement den Sicherungselementkörper beide Stirnseiten in axialer Richtung. Dadurch gelangt das Dichtelement während der Montage vor dem Sicherungselementkörper zur Anlage an die beiden Maschinenelemente und wird bis zur Anlage der Maschinenelemente an den Sicherungselementkörper komprimiert. Dadurch liegt das Dichtelement mit axialer Vorspannung dichtend an den beiden Maschinenelementen an.

Dadurch ist gewährleistet, dass das Dichtelement auch bei Temperatur- oder Druckschwankungen zuverlässig das Eindringen von Medien verhindert.

Aus dem Dichtelement kann zumindest eine Dichtlippe ausgebildet sein. Gemäß einer vorteilhaften Ausgestaltung ist das Dichtelement im Querschnitt betrachtet trapezförmig ausgebildet, wobei die kleinere Grundseite an den Außenumfang des Sicherungselementkörpers angebunden ist und die längere Grundseite das freie des Dichtelementes entlang des Außenumfangs bildet. Bei dieser Ausgestaltung bilden sich auf beiden Stirnseiten Dichtlippen. Dadurch ergeben sich zum einen eine gute Verformbarkeit des Dichtelementes und zum anderen eine linienförmige Anpressung des Dichtelementes an die Maschinenelemente, was eine Verbesserung der Dichtwirkung bewirkt.

Erfindungsgemäß ist das Dichtelement aus elastischem Material ausgebildet. Alternativ kann das Dichtelement auch so geformt sein, das eine elastische Verformbarkeit des Dichtelementes gegeben ist. Dabei kann das Dichtelement aus für die Lebensmittel geeignetem Dichtmaterial bestehen. Ein häufig in der Lebensmittelindustrie verwendeter elastischer Werkstoff ist beispielsweise Ethylen-Propylen-Dien-Kautschuk (EPDM). Ebenso findet Silikon-Kautschuk (VMQ, PVMQ) häufig Anwendung. Ein weiterer vorteilhafter Werkstoff ist beispielsweise Polytetrafluorethylen (PTFE). PTFE ist zwar nur begrenzt elastisch, eine reversible Anpressung eines aus PTFE bestehenden Dichtelementes an die Maschinenelemente mit Vorspannung kann jedoch durch die zuvor beschriebene Ausgestaltung des Dichtelementes erzielt werden. Alternativ ist es auch denkbar, dass das Dichtelement aus einem fluorierten Elastomer wie beispielsweise Fluorkautschuk (FKM) oder fluoriertem Silikon (FVMQ) ausgebildet ist. Derartige Werkstoffe weisen bei guten elastischen Eigenschaften eine hohe chemische Beständigkeit auf.

Das Rückhalteelement kann aus elastischem Material bestehen. In diesem Zusammenhang ist es denkbar, dass das Rückhalteelement aus den zuvor beschriebenen Werkstoffen EPDM, Silikon-Kautschuk, Fluorkautschuk oder PTFE besteht. Die elastische Ausgestaltung des Rückhalteelementes kann dabei durch dessen Formgebung erzielt werden. Vorzugsweise stimmen die Werkstoffe für das Dichtelement und das Rückhalteelement überein.

Das Rückhalteelement kann in der Durchgangsöffnung radial nach innen ragen. Dadurch verkleinert sich der Durchmesser der Durchgangsöffnung, wobei das Rückhalteelement eine ringförmige, radial nach innen ragende Lippe ausbildet. Das Befestigungsmittel, hier die Dünnschaftschraube, kann dabei durch die Durchgangsöffnung des Sicherungselementes hindurchgesteckt werden. Ein Lösen der Dünnschaftschraube aus dem Sicherungselement ist jedoch nur möglich, wenn eine Lösekraft überschritten wird, welche durch die Elastizität des Werkstoffs für das Rückhalteelement und durch das Maß der Querschnittsverkleinerung der Durchgangsöffnung vorgegeben ist. Dabei kann das Rückhalteelement so ausgebildet sein, dass es mit elastischer Vorspannung an dem Schaft der Dünnschaftschraube anliegt. Bei dieser Dichtungsanordnung, bestehend aus Dünnschaftschraube und Sicherungselement, dichtet das Rückhalteelement den Spalt zwischen Dünnschaftschraube und Sicherungselementkörper ab. Insofern fungiert das Rückhalteelement auch als Dichtelement. Dabei kann außenumfangsseitig zusätzlich ein Dichtelement wie zuvor beschrieben vorgesehen sein.

Das Rückhalteelement kann an dem Innenumfang eine Stufengeometrie ausbilden. Bei dieser Ausgestaltung ragt in unbelastetem Zustand ein erster Abschnitt des Rückhalteelementes in radialer Richtung weiter nach innen in die Durchgangsöffnung hinein als ein zweiter Abschnitt des Rückhalteelementes. Dabei kann der erste Abschnitt so ausgebildet sein, dass er mit radialer Vorspannung an dem Schaft der Dünnschaftschraube zur Anlage gelangt. Dadurch ergibt sich eine besonders sichere Fixierung der Dünnschaftschraube, so dass die Dünnschaftschraube besonders sicher gegen unbeabsichtigtes Lösen gesichert ist. Ferner bildet das Rückhalteelement bei dieser Ausgestaltung eine Abdichtung in Form einer Dichtlippe. Die Dichtlippe kann mit elastischer Vorspannung dichtend an dem Schaft der Dünnschaftschraube anliegen. Dadurch verhindert das Rückhalteelement ein Eindringen von Medien in dem Bereich zwischen Sicherungselement und Dünnschaftschraube. Ferner erleichtert die durch die Stufengeometrie ausgebildete Dichtlippe die Montage, da sich die Dichtlippe leichter verformen lässt als ein Rückhalteelement mit rechteckigem Querschnitt. Gleichzeitig kann sich das Rückhalteelement aber nicht selbsttätig von der Dünnschaftschraube lösen.

Dabei kann der Abschnitt der Stufengeometrie mit dem kleineren Durchmesser - der zweite Abschnitt - dem Gewindeabschnitt der Dünnschaftschraube zugeordnet sein. Diese Ausgestaltung ermöglicht eine besonders einfache Montage der Dünnschaftschraube. Hierbei ist insbesondere vorteilhaft, dass sich der lippenförmige erste Abschnitt in Richtung des zweiten Abschnitts umbiegen kann, so dass sich aus dem Rückhalteelement eine in Richtung des Gewindeabschnitts vorgewölbte Dichtlippe bildet. Dadurch ist die Dünnschaftschraube besonders verliersicher gehalten. Gleichzeitig kann das Rückhalteelement durch diese Dichtlippe ein Dichtelement zur Abdichtung des Spalts zwischen den Maschinenelementen bilden.

Das Rückhalteelement kann ein Dichtelement bilden. Dabei kann das Rückhalteelement das einzige Dichtelement des Sicherungselementes bilden. Alternativ ist es denkbar, dass das Rückhalteelement ein erstes Dichtelement bildet und dass außenumfangsseitig an dem Sicherungselementkörper ein weiteres Dichtelement angebracht ist. Bei der ersten Ausgestaltung ergibt sich eine besonders einfache Ausgestaltung des Sicherungselementes. Bei der zweiten Ausgestaltung ergibt sich ein besonders sicheres Abdichten gegenüber eindringenden Medien.

Das Rückhalteelement kann ein Innengewinde aufweisen, welches korrespondierend zu dem Gewindeabschnitt der Dünnschaftschraube ausgebildet ist, wobei die Gewindeachse des Innengewindes zur Normalrichtung der Stirnseite des Sicherungselementkörpers geneigt ist.

Bei einer derartigen Ausgestaltung kann die Dünnschaftschraube zur Montage zunächst durch das erste Maschinenelement gesteckt werden. Anschließend wird das Sicherungselement auf den Gewindeabschnitt der Dünnschaftschraube aufgeschraubt und weitergeschraubt, bis sich das Sicherungselement im Bereich des gewindefreien Schaftabschnitts der Dünnschaftschraube befindet. Dann ist das erste Maschinenelement zwischen dem Schraubenkopf und dem Sicherungselement gefangen, so dass die Dünnschaftschraube nicht mehr aus dem ersten Maschinenelement herausfallen kann. Dadurch, dass das Sicherungselement zum Befestigen bzw. Lösen der Dünnschaftschraube gekippt werden muss, ist ein unbeabsichtigtes Lösen der Dünnschaftschraube nicht möglich. Zum Lösen ist es vielmehr erforderlich, das Sicherungselement so zu verkippen, dass die Gewindeachse der Dünnschaftschraube mit der Gewindeachse des Innengewindes des Sicherungselementes übereinstimmt. Darüber hinaus ist es dann erforderlich, die Dünnschaftschraube aus dem Sicherungselement herauszudrehen.

Die beiden zuvor beschriebenen Ausgestaltungen des Rückhalteelementes ermöglichen es, die Dünnschaftschraube vollständig zu demontieren, was beispielsweise zur gründlichen Reinigung oder zum Austausch der Dünnschaftschraube erforderlich sein kann.

Ein erfindungsgemäßes Befestigungssystem umfasst ein erstes Maschinenelement mit einer Durchgangsbohrung, ein zweites Maschinenelement mit einer Gewindebohrung, eine Dünnschaftschraube, welche durch die Durchgangsbohrung hindurchragt und in die Gewindebohrung eingeschraubt ist, sowie ein Sicherungselement, wobei die Dünnschaftschraube durch die Durchgangsöffnung ragt und wobei das Sicherungselement zwischen dem ersten Maschinenelement und dem zweiten Maschinenelement angeordnet ist, wobei das Dichtelement zumindest an einem Maschinenelement dichtend anliegt und eine Abdichtung des Spaltes zwischen erstem Maschinenelement und zweitem Maschinenelement bewirkt. Vorzugsweise ist das Dichtelement so ausgebildet, dass das Dichtelement unter axialer Vorspannung dichtend an dem ersten Maschinenelement und an dem zweiten Maschinenelement anliegt.

Das zweite Maschinenelement kann dabei ein Gehäuse einer Maschine oder einer Anlage sein. Das erste Maschinenelement kann ein Deckel oder eine Haube sein, welche für Wartungsarbeiten oder dergleichen von dem zweiten Maschinenelement entnehmbar sein soll.

Zusätzlich kann eine mit einem am Außenumfang angeordneten umlaufenden Dichtwulst versehene Unterlegscheibe vorgesehen sein, welche zwischen dem Schraubenkopf der Dünnschaftschraube und dem ersten Maschinenelement angeordnet ist. Die Unterlegscheibe mit Dichtfunktion verbessert die Abdichtung der Schraubverbindung.

Einige Ausgestaltungen des erfindungsgemäßen Sicherungselementes und des erfindungsgemäßen Befestigungssystems werden nachfolgend anhand der Figuren näher erläutert. Diese zeigen, jeweils schematisch:
Fig. 1 ein Befestigungssystem mit einem Sicherungselement mit elastischem Rückhalteelement;
Fig. 2 ein Befestigungssystem mit einem Sicherungselement mit einem mit Innengewinde versehenen Rückhalteelement und Dichtelement;
Fig. 3 ein Befestigungssystem mit einem Sicherungselement mit elastischem Rückhalteelement und stirnseitiger Dichtung, das nicht Teil der Erfindung ist;
Fig. 4 ein Befestigungssystem mit einem Sicherungselement mit einem mit Innengewinde versehenen Rückhalteelement, das nicht Teil der Erfindung ist.

Die Figuren zeigen ein Befestigungssystem 14 mit einem ersten Maschinenelement 15 mit einer Durchgangsbohrung 16 und einem zweiten Maschinenelement 17 mit einer Gewindebohrung 18. Dabei kann das erste Maschinenelement 15 als Deckel einer Maschinenabdeckung und das zweite Maschinenelement 17 als Maschinenabdeckung ausgebildet sein.

Eine Dünnschaftschraube 2 ragt durch die Durchgangsbohrung 16 hindurch und ist in die Gewindebohrung 18 eingeschraubt ist, bzw. kann in die Gewindebohrung eingeschraubt werden. Zwischen erstem Maschinenelement 15 und zweitem Maschinenelement 17 ist ein Sicherungselement 1 angeordnet.

Das Sicherungselement 1 für die Dünnschaftschraube 2 umfasst einen Sicherungselementkörper 3, welcher mit einer Durchgangsöffnung 4 versehen ist, wobei der Durchgangsöffnung 4 ein Rückhalteelement 5 zugeordnet ist, wobei das Rückhalteelement 5 ausgestaltet ist, die Dünnschaftschraube 2 gegen unbeabsichtigtes Lösen zu sichern. Die Dünnschaftschraube 2 ragt durch die Durchgangsöffnung 4 des Sicherungselementes 1.

Die Dünnschaftschraube 2 weist einen Schraubenkopf 20, einen gewindefreien Schaftabschnitt 21 und einen Gewindeabschnitt 10 auf. Der Gewindeabschnitt ist 10 über den gewindefreien Schaftabschnitt 21 mit dem Schraubenkopf 20 verbunden. Das Sicherungselement 1 ist im Bereich des gewindefreien Schaftabschnitts 21 angeordnet. Das Sicherungselement 1 ist hier beabstandet von dem Schraubenkopf 20 so auf dem gewindefreien Schaftabschnitt 21 angeordnet, dass das erste Maschinenelement 15 zwischen dem Schraubenkopf 20 und dem Sicherungselement 1 angeordnet werden kann.

Der Sicherungselementkörper 3 des Sicherungselementes 1 ist als formstabile Scheibe ausgebildet. Dabei bedeutet formstabil, dass der Sicherungselementkörper 3 während der Montage auf die Dünnschaftschraube 2 oder während der Demontage von der Dünnschaftschraube 2 nicht plastisch deformiert wird. Typischerweise sind Sicherungselement 1 und Dünnschaftschraube 2 derart steif ausgebildet, dass eine signifikante elastische Deformation von Sicherungselement 1 und Dünnschaftschraube 2 erfolgt.

Insbesondere für den Einsatz in hygienischer Umgebung ist es vorteilhaft, wenn der Sicherungselementkörper 3 aus Edelstahl ausgebildet ist. Ein vorteilhafter Edelstahl ist X2CrNiMo17-12-2 (Werkstoff Nr. 1.4404). Die beiden Stirnseiten 7 des Sicherungselementkörpers 3 sind vorzugsweise derart poliert, dass die Oberfläche einen Mittenrauwert Ra von höchstens 0,8 µm aufweist.

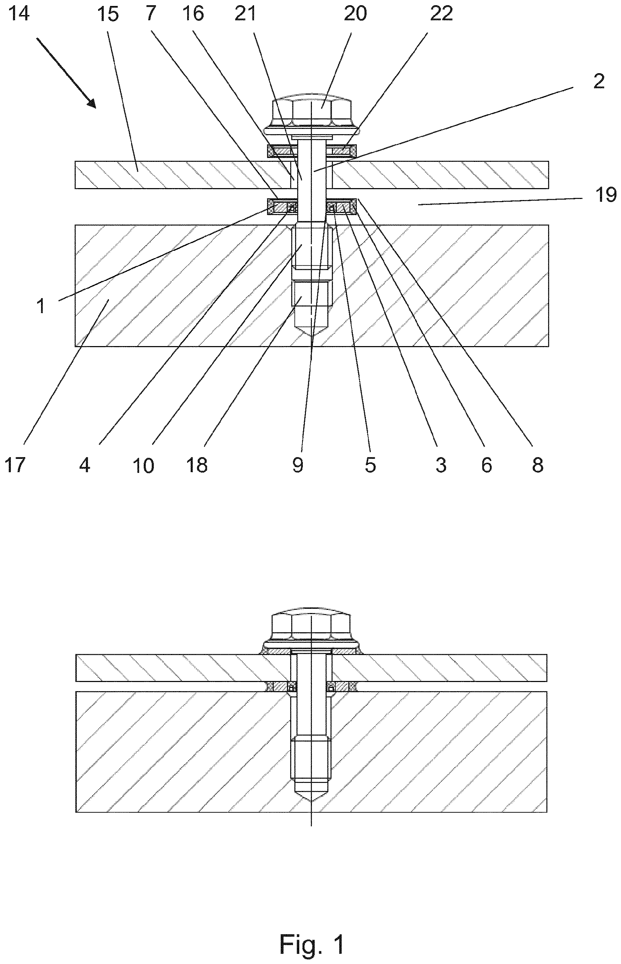

Figur 1 zeigt eine erste Ausgestaltung des Befestigungssystems 14 mit einem Sicherungselement 1 mit außenumfangsseitig umlaufendem Dichtelement 6 und einem aus elastischem Werkstoff ausgebildeten Rückhalteelement 5. Das Dichtelement 6 ist im Querschnitt betrachtet trapezförmig ausgebildet, wobei die kleinere Grundseite an den Außenumfang des Sicherungselementkörpers 3 angebunden ist und die längere Grundseite das freie Ende des Dichtelementes 6 entlang des Außenumfangs bildet. Bei dieser Ausgestaltung bilden sich auf beiden Stirnseiten 7 des Sicherungselementes 1 Dichtlippen 8, welche die Stirnseiten 7 des Sicherungselementkörpers 3 jeweils in axialer Richtung überragen. Das Dichtelement 6 ist aus EPDM ausgebildet und direkt an den Sicherungselementkörper 3 anvulkanisiert und stoffschlüssig angebunden. Zusätzlich kann der Sicherungselementkörper 3 zusätzlich mit einer außenumfangsseitig verlaufenden Nut 23 versehen sein, in welche das Dichtelement 6 hineinragt und dort zusätzlich formschlüssig fixiert ist.

Das Rückhalteelement 5 ist aus elastischem Material ausgebildet und besteht ebenso wie das Dichtelement 6 vorliegend aus EPDM. Das Rückhalteelement 5 ist in der Durchgangsöffnung 4 angeordnet und ragt radial nach innen. Dadurch verkleinert sich der Durchmesser der Durchgangsöffnung 4, wobei das Rückhalteelement 5 eine ringförmige radial nach innen ragende Lippe ausbildet. Die Dünnschaftschraube 2 ist dabei durch die Durchgangsöffnung 4 des Sicherungselementes 1 hindurchgesteckt. Ein Lösen der Dünnschaftschraube 2 aus dem Sicherungselement 1 ist jedoch nur möglich, wenn eine Lösekraft überschritten wird, welche durch die Elastizität des Werkstoffs für das Rückhalteelement 5 und durch das Maß der Querschnittsverkleinerung der Durchgangsöffnung 4 vorgegeben ist.

Das Rückhalteelement 5 bildet an dem Innenumfang eine Stufengeometire aus. Bei dieser Ausgestaltung ragt in unbelastetem Zustand, also vor Montage der Dünnschaftschraube 2 ein erster Abschnitt des Rückhalteelementes 5 in radialer Richtung weiter nach innen in die Durchgangsöffnung 4 hinein als ein zweiter Abschnitt des Rückhalteelementes 5. Dabei biegt sich der lippenförmige erste Abschnitt in Richtung des zweiten Abschnitts um, so dass sich aus dem Rückhalteelement 5 eine in Richtung des Gewindeabschnitts 22 vorgewölbte Dichtlippe ausbildet, welche mit radialer Vorspannung an dem Schaftabschnitt 21 der Dünnschaftschraube 2 zur Anlage gelangt. Dadurch bildet das Rückhalteelement 5 ein weiteres Dichtelement.

Das dem Sicherungselementkörper 3 zugeordnete Dichtelement 6 bewirkt eine Abdichtung des Spaltes 19 zwischen erstem Maschinenelement 15 und zweitem Maschinenelement 17.

Zwischen Schraubenkopf 20 und erstem Maschinenelement 15 ist eine mit einer umlaufenden Dichtung versehene Unterlegscheibe 22 angeordnet.

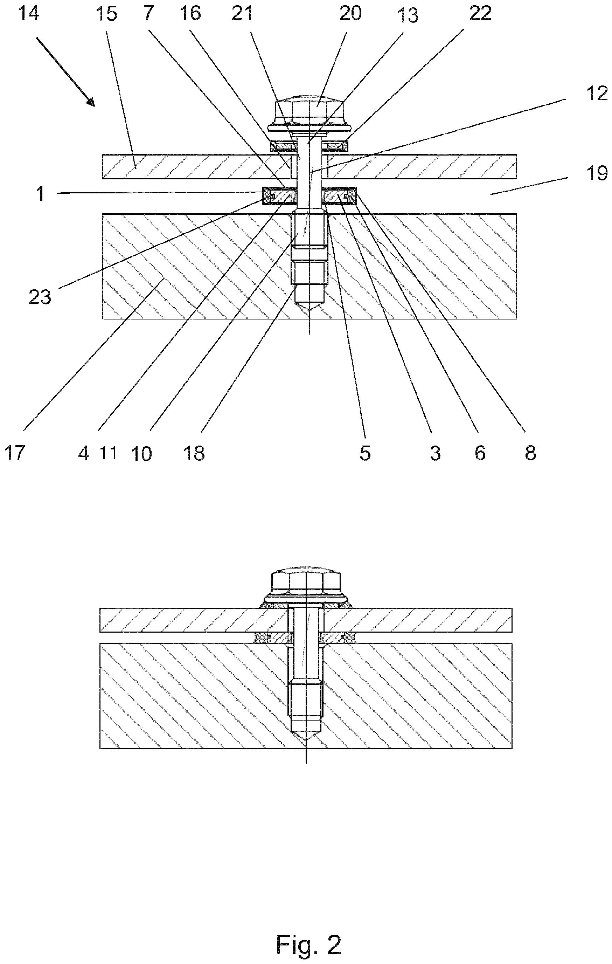

Figur 2 zeigt eine weitere Ausgestaltung des Befestigungssystems 14 mit einem Sicherungselement 1 mit außenumfangsseitig umlaufendem Dichtelement 6 und einem Rückhalteelement 5. Das Dichtelement 6 ist im Querschnitt betrachtet trapezförmig ausgebildet, wobei die kleinere Grundseite an den Außenumfang des Sicherungselementkörpers 3 angebunden ist und die längere Grundseite das freie Ende des Dichtelementes 6 entlang des Außenumfangs bildet. Bei dieser Ausgestaltung bilden sich auf beiden Stirnseiten 7 des Sicherungselementes 1 Dichtlippen 8, welche die Stirnseiten 7 des Sicherungselementkörpers 3 jeweils in axialer Richtung überragen. Das Dichtelement 6 ist aus EPDM ausgebildet und direkt an den Sicherungselementkörper 3 anvulkanisiert und stoffschlüssig angebunden. Darüber hinaus ist der Sicherungselementkörper 3 in dieser Ausgestaltung zusätzlich mit einer außenumfangsseitig verlaufenden Nut 23 versehen, in welche das Dichtelement 6 hineinragt und dort formschlüssig fixiert ist.

Das Sicherungselement 1 weist eine Durchgangsöffnung 4 auf, welche mit einem Innengewinde 11 versehen ist. Das Innengewinde 11 des Sicherungselementes 1 ist korrespondierend zu dem Gewindeabschnitt 10 der Dünnschaftschraube 2 ausgebildet. Dazu sind das Innengewinde 11 und der Gewindeabschnitt 10 vom gleichen Gewindetyp, Innengewinde 11 und Gewindeabschnitt 10 haben einen gemeinsamen Durchmesser und dieselbe Gewindesteigung. Das Sicherungselement 1 kann daher nur von dem gewindefreien Schaftabschnitt 21 der Dünnschaftschraube 2 entfernt werden, indem das Sicherungselement 1 über den Gewindeabschnitt 10 geschraubt wird. Die Gewindeachse 12 des Innengewindes 11 ist zur Normalrichtung 13 der ersten Stirnseite 7 des Sicherungselementkörpers 3 geneigt. Daher ist es erforderlich, das Sicherungselement 1 manuell so zu verkippen, dass die Gewindeachsen 12 von Dünnschaftschraube 2 und Innengewinde 11 des Sicherungselementes 1 übereinstimmen. Insofern fungiert das Innengewinde 11 als Rückhalteelement 5.

Das dem Sicherungselementkörper 3 zugeordnete Dichtelement 6 bewirkt eine Abdichtung des Spaltes 19 zwischen erstem Maschinenelement 15 und zweitem Maschinenelement 17.

Zwischen Schraubenkopf 20 und erstem Maschinenelement 15 ist eine mit einer umlaufenden Dichtung versehene Unterlegscheibe 22 angeordnet.

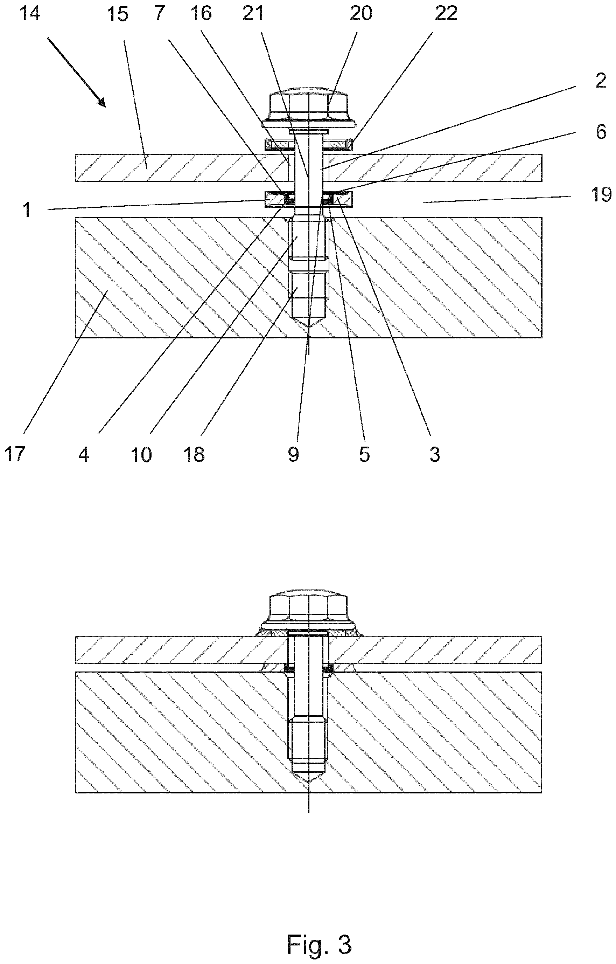

Figur 3 zeigt eine Weiterbildung des in Figur 1 gezeigten Befestigungssystems 15. Bei der vorliegenden Ausgestaltung ist das Dichtelement 6 materialeinheitlich und einstückig mit dem Rückhalteelement 5 ausgebildet und erstreckt sich über einen Teilbereich einer Stirnseite 7 des Sicherungselementkörpers 3. Dabei überragt das Dichtelement 6 die Stirnseite 7 in axialer Richtung.

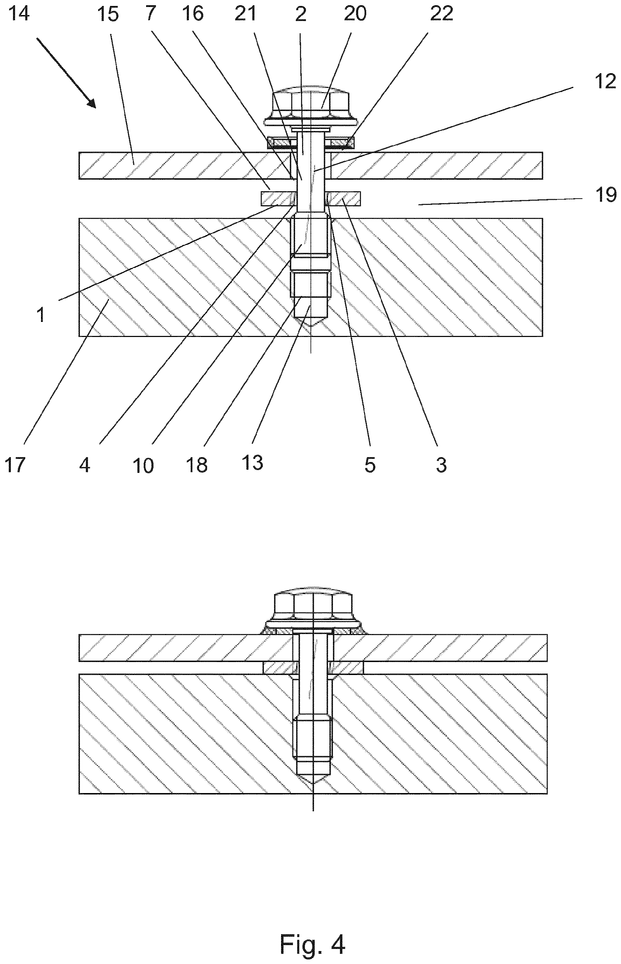

Figur 4 zeigt eine alternative Ausgestaltung des in Figur 2 gezeigten Befestigungssystems 15. Bei dieser Ausgestaltung ist lediglich die Unterlegscheibe 22 mit einer umlaufenden Dichtung versehen. Der Sicherungselementkörper 3 weist hingegen im Unterschied zu Figur 2 keinerlei Dichtkörper auf.

Das Sicherungselement 1 weist eine Durchgangsöffnung 4 auf, welche mit einem Innengewinde 11 versehen ist. Das Innengewinde 11 des Sicherungselementes 1 ist korrespondierend zu dem Gewindeabschnitt 10 der Dünnschaftschraube 2 ausgebildet. Dazu sind das Innengewinde 11 und der Gewindeabschnitt 10 vom gleichen Gewindetyp, Innengewinde 11 und Gewindeabschnitt 10 haben einen gemeinsamen Durchmesser und dieselbe Gewindesteigung. Das Sicherungselement 1 kann daher nur von dem gewindefreien Schaftabschnitt 21 der Dünnschaftschraube 2 entfernt werden, indem das Sicherungselement 1 über den Gewindeabschnitt 10 geschraubt wird. Die Gewindeachse 12 des Innengewindes 11 ist zur Normalrichtung 13 der ersten Stirnseite 7 des Sicherungselementkörpers 3 geneigt. Daher ist es erforderlich, das Sicherungselement 1 manuell so zu verkippen, dass die Gewindeachsen 12 von Dünnschaftschraube 2 und Innengewinde 11 des Sicherungselementes 1 übereinstimmen. Insofern fungiert das Innengewinde 11 als Rückhalteelement 5.

Zwischen Schraubenkopf 20 und erstem Maschinenelement 15 ist eine mit einer umlaufenden Dichtung versehene Unterlegscheibe 22 angeordnet. Die Dichtung der Unterlegscheibe 22 bildet bei dir Ausgestaltung gemäß Figur 4 das Dichtelement, welches indirekt dem Sicherungselementkörper 3 zugeordnet ist.

## Patentansprüche

1. Befestigungssystem (14), umfassend ein erstes Maschinenelement (15) mit einer Durchgangsbohrung (16), ein zweites Maschinenelement (17) mit einer Gewindebohrung (18), eine Dünnschaftschraube (2), welche durch die Durchgangsbohrung (16) hindurchragt und in die Gewindebohrung (18) eingeschraubt ist sowie ein Sicherungselement (1), wobei die Dünnschaftschraube (2) einen Schraubenkopf (20), einen gewindefreien Schaftabschnitt (21) und einen Gewindeabschnitt (10) aufweist und wobei der Gewindeabschnitt (10) über den gewindefreien Schaftabschnitt (21) mit dem Schraubenkopf (20) verbunden ist, wobei das Sicherungselement (1) im Bereich des gewindefreien Schaftabschnitts (21) angeordnet ist, wobei das Sicherungselement (1) zwischen dem ersten Maschinenelement (15) und dem zweiten Maschinenelement (17) angeordnet ist und eine Abdichtung des Spaltes (19) zwischen erstem Maschinenelement (15) und zweitem Maschinenelement (17) bewirkt, wobei das Sicherungselement (1), einen Sicherungselementkörper (3) umfasst, welcher mit einer Durchgangsöffnung (4) versehen ist, wobei die Dünnschaftschraube (2) durch die Durchgangsöffnung (4) des Sicherungselementes (1) ragt, wobei der Durchgangsöffnung (4) ein Rückhalteelement (5) zugeordnet ist, wobei das Rückhalteelement (5) ausgestaltet ist, die Dünnschaftschraube (2) gegen unbeabsichtigtes Lösen zu sichern, wobei dem Sicherungselementkörper (3) zumindest ein Dichtelement (6) zugeordnet ist, **dadurch gekennzeichnet, dass** der Sicherungselementkörper (3) formstabil und scheibenförmig ausgebildet ist und dass das Dichtelement (6) außenumfangsseitig an dem Sicherungselementkörper (3) angeordnet ist, **dadurch gekennzeichnet, dass** das Rückhalteelement (5) aus elastischem Material ausgebildet ist.

2. Befestigungssystem nach Anspruch 1, **dadurch gekennzeichnet, dass** das Dichtelement (6) zumindest einseitig eine erste Stirnseite (7) des Sicherungselementkörpers (3) in axialer Richtung überragt.

3. Befestigungssystem nach Anspruch 1 oder 2, **dadurch gekennzeichnet, dass** aus dem Dichtelement (6) zumindest eine Dichtlippe (8) ausgebildet ist.

4. Befestigungssystem nach Anspruch 1, **dadurch gekennzeichnet, dass** das Rückhalteelement (5) in der Durchgangsöffnung (4) radial nach innen ragt.

5. Befestigungssystem nach Anspruch 4, **dadurch gekennzeichnet, dass** das Rückhalteelement (5) an dem Innenumfang (9) eine Stufengeometrie ausbildet.

6. Befestigungssystem nach Anspruch 5, **dadurch gekennzeichnet, dass** ein erster Abschnitt der Stufengeometrie des Rückhalteelementes (5), welcher den kleineren Durchmesser aufweist, dem Gewindeabschnitt (10) der Dünnschaftschraube (2) zugeordnet ist.

7. Befestigungssystem nach einem der Ansprüche 1, 4 bis 6, **dadurch gekennzeichnet, dass** das Rückhalteelement (5) ein Dichtelement (6) bildet.

8. Befestigungssystem nach einem der Ansprüche 6 bis 7, **dadurch gekennzeichnet, dass** der Abschnitt der Stufengeometrie des Rückhalteelements (5) mit kleinerem Durchmesser mit radialer Vorspannung an dem Schaftabschnitt (21) anliegt und eine Dichtlippe ausbildet.

## Claims

1. Fastening system (14), comprising a first machine element (15) having a through-hole (16), a second machine element (17) having a threaded hole (18), a thin-shaft screw (2) which penetrates through the through-hole (16) and is screwed into the threaded hole (18), and a securing element (1), wherein the thin-shaft screw (2) comprises a screw head (20), an unthreaded shaft portion (21) and a threaded portion (10) and wherein the threaded portion (10) is connected to the screw head (20) via the unthreaded shaft portion (21), wherein the securing element (1) is arranged in the region of the unthreaded shaft portion (21), wherein the securing element (1) is arranged between the first machine element (15) and the second machine element (17) and creates a sealing of the gap (19) between the first machine element (15) and the second machine element (17), wherein the securing element (1) comprises a securing element body (3) provided with a through-opening (4), wherein the thin-shaft screw (2) penetrates through the through-opening (4) of the securing element (1), wherein a retaining element (5) is assigned to the through-opening (4), wherein the retaining element (5) is configured to secure the thin-shaft screw (2) against unintended release, wherein at least one sealing element (6) is assigned to the securing element body (3), **characterised in that** the securing element body (3) is formed dimensionally stable and disc-shaped, and **in that** the sealing element (6) is arranged on the external circumference of the securing element body (3), **characterised in that** the retaining element (5) is formed from resilient material.

2. Fastening system according to claim 1, **characterised in that** the sealing element (6) axially overhangs a first end face (7) of the securing element body (3), at least on one side.

3. Fastening system according to any of claims 1 or 2, **characterised in that** at least one sealing lip (8) is formed from the sealing element (6).

4. Fastening system according to claim 1, **characterised in that** the retaining element (5) protrudes radially inwards in the through-opening (4).

5. Fastening system according to claim 4, **characterised in that** the retaining element (5) forms a step geometry on the internal circumference (9).

6. Fastening system according to claim 5, **characterised in that** a first portion, which has the smaller diameter, of the step geometry of the retaining element (5) is assigned to the threaded portion (10) of the thin-shaft screw (2).

7. Fastening system according to any of claims 1 and 4 to 6, **characterised in that** the retaining element (5) forms a sealing element (6).

8. Fastening system according to any of claims 6 or 7, **characterised in that** the portion of the step geometry of the retaining element (5) having a smaller diameter is positioned against the shaft portion (21) with a radial bias and forms a sealing lip.

## Revendications

1. Système de fixation (14), comprenant un premier élément de machine (15) avec un premier trou traversant (16), un second élément de machine (17) avec un trou taraudé (18), une vis à tige mince (2) faisant saillie à travers le trou traversant (16) et vissée dans le trou taraudé (18) ainsi qu'un élément de blocage (1) dans lequel la vis à tige mince (2) comporte une tête de vis (20), une partie de tige non filetée (21) et une partie fileté (10) et dans lequel la partie filetée (10) est reliée à la tête de vis (20) par l'intermédiaire de la partie de tige non filetée (21), dans lequel l'élément de blocage (1) est agencé dans la zone de la partie de tige non filetée (21), dans lequel l'élément de blocage (1) est agencé entre le premier élément de machine (15) et le second élément de machine (17) et assure une étanchéité de l'espace (19) entre le premier élément de machine (15) et le second élément de machine (17), dans lequel l'élément de blocage (1) comprend un corps d'élément de blocage (3) muni d'un orifice de passage (4), dans lequel la vis à tige mince (2) fait saillie à travers l'orifice de passage (4) de l'élément de blocage (1), dans lequel l'orifice de passage (4) est associé à un élément de retenue (5), dans lequel l'élément de retenue (5) est conçu pour empêcher un desserrage involontaire de la vis à tige mince (2), dans lequel au moins un élément d'étanchéité (6) est associé au corps d'élément de blocage (3), **caractérisé en ce que** le corps d'élément de blocage (3) est réalisé de manière indéformable et en forme de rondelle et **en ce que** l'élément d'étanchéité (6) est agencé sur le côté de la circonférence extérieure du corps d'élément de blocage (3), **caractérisé en ce que** l'élément de retenue (5) est réalisé à partir d'un matériau élastique.

2. Système de fixation selon la revendication 1, **caractérisé en ce que** l'élément d'étanchéité (6) fait saillie une première face avant (7) du corps d'élément de blocage (3) au moins d'un côté, dans une direction axiale.

3. Système de fixation selon la revendication 1 ou 2, **caractérisé en ce qu'**au moins une lèvre d'étanchéité (8) est formée à partir de l'élément d'étanchéité (6).

4. Système de fixation selon la revendication 1, **caractérisé en ce que** l'élément de retenue (5) fait saillie radialement vers l'intérieur dans l'orifice de passage (4).

5. Système de fixation selon la revendication 4, **caractérisé en ce que** l'élément de retenue (5) forme une géométrie étagée sur la circonférence intérieure (9).

6. Système de fixation selon la revendication 5, **caractérisé en ce qu'**une première partie de la géométrie étagée de l'élément de retenue (5), qui a un diamètre plus petit, est associée à la partie filetée (10) de la vis à tige mince (2).

7. Système de fixation selon l'une des revendications 1, 4 à 6, **caractérisé en ce que** l'élément de retenue (5) forme un élément d'étanchéité (6).

8. Système de fixation selon l'une des revendications 6 à 7, **caractérisé en ce que** la partie de la géométrie étagée de l'élément de retenue (5) ayant un diamètre plus petit s'applique contre la partie de tige (21) avec une précontrainte radiale et forme une lèvre d'étanchéité.
